Europäisches Patentamt

(19) **European Patent Office**

**Office européen des brevets**

(11) Veröffentlichungsnummer: **0 020 917**
**B1**

(12) **EUROPÄISCHE PATENTSCHRIFT**

(45) Veröffentlichungstag der Patentschrift:
23.03.83

(51) Int. Cl.³: **G 08 B 13/18**, G 01 V 9/04

(21) Anmeldenummer: **80102142.9**

(22) Anmeldetag: **21.04.80**

(54) Optische Anordnung für einen passiven Infrarot-Bewegungsmelder.

(30) Priorität: **25.04.79 DE 2916768**

(43) Veröffentlichungstag der Anmeldung:
**07.01.81 Patentblatt 81/1**

(45) Bekanntmachung des Hinweises auf die Patenterteilung:
**23.03.83 Patentblatt 83/12**

(84) Benannte Vertragsstaaten:
**AT CH FR GB IT LI NL SE**

(56) Entgegenhaltungen:
**EP-A-0 014 825**
**DE-A-2 653 111**
**DE-A- 2 855 322**
**FR-A-2 321 115**
**US-A-3 886 360**
**US-A-3 955 184**
**Rudolf Kingslake: Applied Optics and Optical Engineering, Vol. II; Academic Press Inc., New York, San Francisco, London, 1965, Seiten 366—368 u. 374—375**

(73) Patentinhaber: **Heimann GMBH, Weher Köppel 6, D-6200 Wiesbaden 1 (DE)**

(72) Erfinder: **Herwig, Thomas, Dipl.-Phys., Nelkenstrasse 7, D-6229 Schlangenbad 3 (DE)**
Erfinder: **Dönges, Gerhard, Dipl.-Ing., Lessingstrasse 32, D-6204 Taunusstein 1 (DE)**

(74) Vertreter: **Mehl, Ernst, Dipl.-Ing., Postfach 22 01 76, D-8000 München 22 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Optische Anordnung für einen passiven Infrarot-Bewegungsmelder

Die Erfindung betrifft eine optische Anordnung für einen passiven Infrarot-Bewegungsmelder zum Überwachen eines Raumes mit den Merkmalen gemäß dem Oberbegriff von Patentanspruch 1.

Eine derartige optische Anordnung ist aus der Veröffentlichung von Rudolf Kingslake in »Applied Optics and Optical Engineering«, Vol. II, Academic Press Inc., New York, San Francisco, London, 1965, Seiten 366—368 und 374—375 bekannt. Die dort beschriebene Vorrichtung arbeitet nach dem Scanner-Prinzip, d. h. ein Richtspiegel richtet die Strahlung aus einem Sichtfeld mit möglichst kleinem Querschnitt auf den Empfänger. Der Richtspiegel wird um die Achse hin- und hergedreht, so daß das erfaßte Sichtfeld ständig wechselt. Um eine Bewegung im überwachten Raumbereich zu erkennen, ist eine komplizierte Auswerteinrichtung mit Speicherung der Meßwerte erforderlich.

Die nicht vorveröffentlichte EP-A 14 825 beschreibt einen Infrarot-Bewegungsmelder, welcher über mehrere Richtspiegel mehrere gegeneinander abgegrenzte Sichtfelder gleichzeitig erfaßt.

Eine weitere optische Anordnung ist bekannt und beispielsweise in der DE-AS 21 03 909 beschrieben. Zum Überwachen eines Raumes bzw. zum Absichern von definierten Raumwinkeln benötigt man optisch aktive Wände als flächenhaft absichernde Vorhänge, die die abzusichernden Raumteile entweder von anderen Raumteilen völlig abtrennen oder vollständig umschließen. Nicht nur bei der Überwachung von Räumen auf ein unbefugtes Eindringen von Personen sondern vor allem beim Absichern von bewegten Maschinenteilen, also zu Zwecken des Arbeitsschutzes, ist ein lückenloses Abschirmen erforderlich. Lichtschranken können solche Zwecke nicht erfüllen. In der DE-AS 2 103 909 ist auf der Basis eines Infrarot-Bewegungsmelders eine Möglichkeit beschrieben, mit Hilfe einer besonderen Optik eine kegelmantelförmige optisch aktive Wand zu erzeugen, die einen kegelförmigen Raum einschließt d. h. überwacht. Infrarot-Strahlung aus dem Eigenvolumen der Wand — sie hat eine von der Optik bestimmte Stärke — wird auf einen Infrarot-Detektor abgebildet. Aus einer für bewegte Personen charakteristischen Änderungsgeschwindigkeit der eingefangenen Infrarot-Strahlung wird dann ein elektrisches Signal geformt, das beispielsweise zu Alarmzwecken verwendet wird. Es ist dadurch für eine Person nicht möglich, unbemerkt die kegelmantelförmige Wand zu durchdringen, also beispielsweise in den kegelförmigen Raum zu gelangen.

Für verschiedene Zwecke ist es erwünscht, nicht nur Räume mit andersartiger Geometrie abzusichern, sondern auch eine für den Anwender variable Gestaltung des abzusichernden Raumes zu ermöglichen. Insbesondere für den Arbeitsschutz muß ein Überwachungsgerät universell einsetzbar sein d. h. aber an den jeweiligen Einsatzort angepaßt werden können. Auch ist für die Raumüberwachung die Kegelform nicht besonders günstig, da ein Raum normalerweise einen rechteckförmigen Grundriß hat.

Der vorliegenden Erfindung liegt die Aufgabe zugrunde, für einen Infrarot-Bewegungsmelder eine optische Anordnung anzugeben, die den universellen Einsatz ermöglicht. Insbesondere vom Anwender soll die Geometrie des überwachten Raumes in weitestem Umfang den jeweiligen Erfordernissen angepaßt werden können.

Zur Lösung dieser Aufgabe wird erfindungsgemäß eine optische Anordnung gemäß Oberbegriff mit den Merkmalen des Kennzeichens von Patentanspruch 1 vorgeschlagen.

Eine Ausgestaltung der Erfindung ist dadurch gekennzeichnet, daß vier schwenkbare Richtspiegel vorgesehen sind, deren Schwenkachsen ein Viereck um die optische Achse des Hohlspiegels bilden.

Mit Hilfe dieser erfindungsgemäßen optischen Anordnung — insbesondere in der Ausführung mit den vier Richtspiegeln, die den meisten Anwendungen gerecht werden dürfte — ist ein universell einsetzbarer Bewegungsmelder geschaffen. Der abzusichernde Raum ist begrenzt von ebenen Flächen; im geschlossenen Fall bildet er eine Pyramide, im Falle von vier rechtwinklig zueinanderstehenden Richtspiegeln eine Pyramide mit rechteckförmiger Grundfläche. Dieser Grundriß entspricht unseren Wohn- bzw. Arbeitsräumen besser als ein kreisförmiger Grundriß des bekannten Kegels.

Weiter erlaubt eine erfindungsgemäße optische Anordnung die Absicherung durch einen einfachen planen Vorhang, der nur zwei Raumteile voneinander trennt oder auch beispielsweise Türen oder Schaufenster vollständig absichert.

Auf dem Gebiet des Arbeitsschutzes läßt sich die erfindungsgemäße optische Anordnung dem jeweiligen Einsatzort anpassen. Je nach der Form der abzusichernden Raumteile kann der Anwender die optische Anordnung einstellen. Temperaturschwankungen im abzusichernden Bereich selbst, die von bewegten Maschinenteilen herrühren können, lassen sich ausblenden.

Nach einer vorteilhaften Ausgestaltung einer erfindungsgemäßen optischen Anordnung ist vorgesehen, daß zum Erfassen der Bewegungsrichtung der die Strahlungsänderung auslösenden Ursache ein zweiter optisch wirksamer Vorhang innerhalb des ersten gebildet wird, dadurch daß eine zweite entsprechende optische Anordnung in derselben optischen Achse vor der ersten vorgesehen ist und daß der bzw. die Richtspiegel der zweiten optischen Anordnung einen geringeren Winkel zur optischen Achse haben als die der ersten.

Man kann damit die Richtung erkennen, in der eine sich im überwachten Raum bewegende Person die optisch wirksame Wand durchquert, ob also die Person eindringt oder den Raum verläßt.

Dabei ist für eine kurze Baulänge der gesamten optischen Anordnung vorteilhaft, wenn der Detektor, der Hohlspiegel und der Kegelstumpfkörper der zweiten optischen Anordnung in der optischen Achse spiegelbildlich zur ersten Anordnung liegen.

Die Erfindung soll anhand zweier in den Figuren der Zeichnung dargestellter Ausführungsbeispiele näher erläutert werden. Dabei zeig die

Fig. 1 einen seitlichen Schnitt und die

Fig. 2 eine Draufsicht vom überwachten Raum aus auf eine erfindungsgemäße Anordnung mit vier Richtspiegeln,

Fig. 3 einen seitlichen Schnitt durch eine erweiterte optische Anordnung, mit der die Richtung einer Bewegung erkannt werden kann.

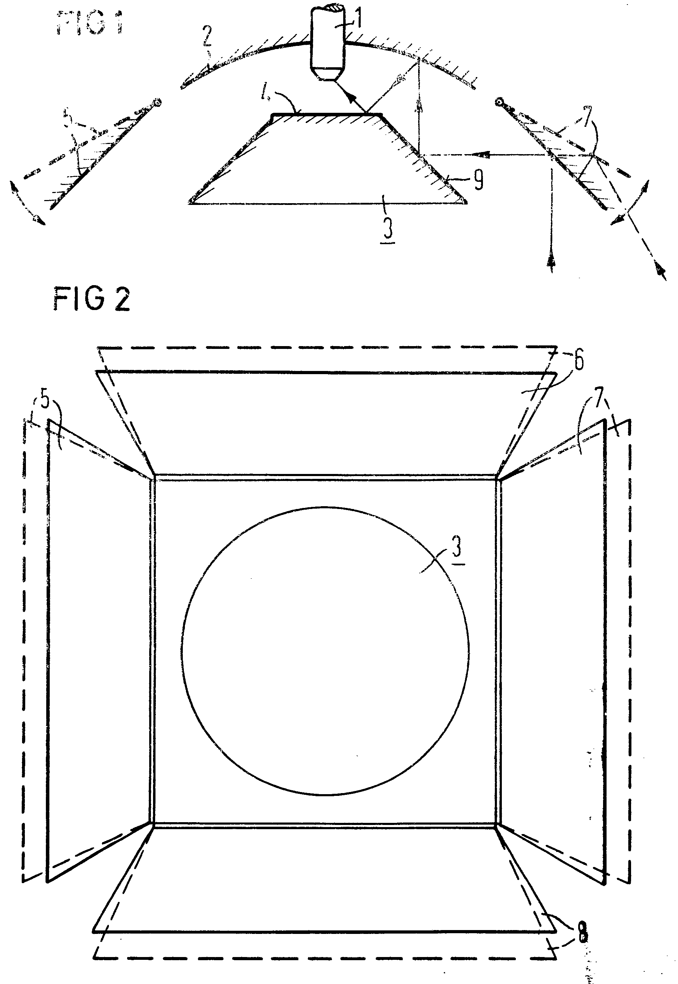

Die Schnittzeichnung nach Fig. 1 enthält schematisch einen Infrarot-Detektor 1, der zentral in einen sphärischen Hohlspiegel 2 mit gleicher Blickrichtung eingelassen ist. Dem Hohlspiegel 2 und dem Detektor 1 gegenüber liegt ein kegelstumpfförmiger Spiegelkörper 3 mit derselben Achse, wobei die kleinere von zwei senkrecht zur Achse liegenden Schnittflächen als Planspiegel 4 dem Detektor 1 gegenüberliegt. Der Hohlspiegel 2 wird am Rand fortgesetzt durch vier plane rechteckförmige Richtspiegel 5 bis 8, von denen 5 und 7 im Schnittbild zu sehen sind. Die Richtspiegel 5 his 8 sind gegen die Achse des Hohlspiegels 2 d. h. gegen die optische Achse der gesamten Anordnung um eine Kante drehbar, die dem Rand des Hohlspiegels 2 benachbart liegt. Der Hohlspiegel 2 ist dann am Rand sozusagen durch einen pyramidenstumpfförmigen Innenspiegel mit quadratischem Querschnitt erweitert, wobei der Öffnungswinkel variabel ist. Der kegelstumpfförmige Spiegelkörper 3 trägt auf seiner Mantelfläche einen Kegelmantelspiegel 9.

In der Draufsicht der Fig. 2 vom überwachten Raum her gesehen auf die optische Anordnung sind zu sehen der kegelstumpfförmige Spiegelkörper 3 mit seiner größeren Schnittfläche und die vier ebenen Richtspiegel 5 bis 8.

In beiden Figuren 1 und 2 ist die Schwenkbarkeit der Richtspiegel 5 bis 8 durch zwei Stellungen angedeutet. In Fig. 1 ist ein exemplarischer Strahlengang eingezeichnet. In der engeren Stellung des Richtspiegels 7 tritt aus einer senkrechten — die optische Anordnung sei an der Decke eines überwachten Raumes gedacht — Richtung Strahlung auf die Mitte des Richtspiegels 7, wird von dort auf den Kegelmantelspiegel 9 geworfen und von dort auf den Hohlspiegel 2. Dieser reflektiert die Strahlung auf den Planspiegel 4 des Kegelstumpfkörpers 3, von wo sie dann auf den Infrarot-Detektor 1 geworfen wird. Dieses Spiegelsystem bildet eine Cassegrain-Optik mit sehr geringer Baulänge und guten Bündeleigenschaften. Der dargestellte senkrechte Einfallstrahl ist repräsentativ für Strahlen, die aus einer Wand auf den Richtspiegel 7 fallen, die senkrecht zur Schnittfläche der Fig. 1 längs dem gezeichneten einfallenden Strahl verläuft. Anders ausgedrückt heißt dies, daß unterhalb der Richtspiegel ein säulenförmiger Raum mit quadratischem Querschnitt und senkrechten Säulenwänden umgeben ist von einer Wand, deren Strahlung vom Detektor 1 erfaßt wird.

Die dargestellte zweite Stellung der Richtspiegel 5 bis 8 mit größerem Öffnungswinkel ergibt dann eine Öffnung des säulenförmigen Raumes zu einer quadratischen Pyramide mit schrägen Wänden.

Ein einziger Richtspiegel würde eine einfache Wand ergeben, die als absichernder Vorhang einsetzbar ist beispielsweise für Schaufenster oder Türen. Die Pyramide läßt sich durch unterschiedliche Öffnungswinkel der Richtspiegel 5 bis 8 beliebig gestalten. Einzelne Sektoren können ausgeblendet werden durch Abdecken der entsprechenden Stellen des Kegelmantelspiegels 9 und/oder der Richtspiegel 5 bis 8. Dadurch ist eine optimale Anpassung möglich, insbesondere an die Erfordernisse des Arbeitsschutzes, um beispielsweise einen ungehinderten Zugang von einer bestimmten Seite aus zuzulassen.

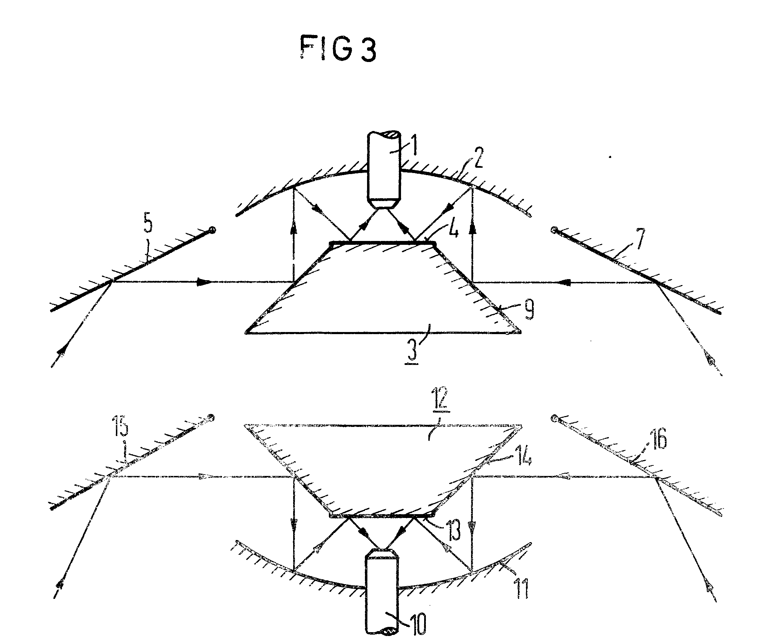

Die erweiterte Ausführung nach Fig. 3 entspricht insofern der nicht Fig. 1, als wieder vorhanden sind ein Infrarot-Detektor 1, zentral eingelassen in einen Hohlspiegel 2, ein Kegelstumpfkörper 3 mit rundem Planspiegel 4 und Kegelmantelspiegel 9. In der Blickrichtung des Detektors 1 davor gelegen befindet sich eine weitere ähnliche Anordnung mit derselben optischen Achse.

Sie besteht aus einem Infrarot-Detektor 10, der zentral in derselben Blickrichtung eingelassen ist in einen Hohlspiegel 11. In derselben optischen Achse liegt ein Kegelstumpfkörper 12 mit der kleineren senkrecht zur Achse stehenden Schnittfläche als Planspiegel 13 dem Detektor 10 zugekehrt und mit einem Kegelmantelspiegel 14. Diese zweite optische Anordnung liegt spiegelbildlich zur Anordnung mit dem Detektor 1, Hohlspiegel 2 und Kegelstumpfkörper 3 in der optischen Achse gegenüber. Entsprechende Richtspiegel 15, 16 — die beiden anderen sind in der schematischen Schnittzeichnung nicht dargestellt — sind jedoch so angeordnet, daß sie Strahlen aus fast derselben Richtung empfangen wie die entsprechenden Richtspiegel 5 und 7 und auf den Kegelmantelspiegel 14 werfen, d. h. sie stehen im wesentlichen parallel zu diesen und sind auch in ihrer Schwenkbarkeit parallel angeordnet; ihre Drehkante kommt dann etwa an die größere Schnittfläche des Kegelstumpfkörpers 12 zu liegen. Die Richtspiegel 15 und 16 sind jedoch etwas enger im Öffnungswinkel gestellt als die Richtspiegel 5 und 7, so daß sie jeweils eine Pyramidenwand erfassen, die innerhalb der von den Richtspiegeln 5 bzw. 7 erfaßten Pyramidenwand liegt. Der überwachte Raum ist demnach von zwei ineinanderliegenden Pyramidenwänden abgedeckt.

Falls nun eine Person oder allgemein ein Infrarot-Strahlung aussendender und sich darin von der Umgebungsstrahlung abhebender Körper durch die Pyramidenwände bewegt, kann aus der zeitlichen Reihenfolge der von den Detektoren 1 und 10 gelieferten elektrischen Signale die Bewegungsrichtung des Körpers erfaßt werden: ob er sich in den abgesicherten Raum hineinbewegt oder heraus. Darüber hinaus kann außer der Bewegungsrichtung auch die Bewegungsgeschwindigkeit ermittelt werden. Dies erleichtert die Erkennbarkeit charakteristischer Bewegungen und hilft, Fehlalarme zu reduzieren.

## Patentansprüche

1. Optische Anordnung für einen passiven Infrarot-Bewegungsmelder zum Überwachen eines Raumes mit den Merkmalen:

a) eine Spiegelanordnung lenkt die aus mindestens einem Sichtfeld kommende Strahlung auf einen Infrarot-Detektor (1), der aus einer charakteristischen Änderung der Strahlung ein Signal formen läßt;

b) die Spiegelanordnung enthält mindestens einen Richtspiegel (7), einen Hohlspiegel (2) und eine spiegelnde Fläche (4), die dem Detektor gegenüberliegt;

c) der Hohlspiegel (2) umgibt zentral den Infrarotdetektor (1);

d) dem Detektor gegenüber ist ein Spiegelkörper (3) angeordnet, dessen Rotationsachse auf der optischen Achse des Empfängers (1) liegt und dessen spiegelnde Oberfläche dem Hohlspiegel (2) zugewandt ist;

gekennzeichnet durch folgende Merkmale:

e) das Sichtfeld bzw. die Sichtfelder bilden einen optisch wirksamen Vorhang, der den zu überwachenden Raum zumindest teilweise umgibt;

f) der dem Detektor (1) gegenüber angeordnete Spiegelkörper (3) ist als Kegelstumpf ausgebildet, dessen kleinere Schnittfläche (4) dem Detektor (1) und dessen Mantelfläche (9) dem Hohlspiegel (2) zugewandt ist;

g) der Kegelmantelfläche (4) zugekehrt ist mindestens ein am Rande des Hohlspiegels (2) angebrachter, planer Richtspiegel (5 bis 8), der sich um eine der Blickrichtung abgekehrte Kante gegen die optische Achse des Hohlspiegels (2) schwenken läßt, und welcher unter einem einstellbaren Winkel die ankommende Strahlung auf die Kegelmantelfläche (9) reflektiert.

2. Optische Anordnung nach Anspruch 1, dadurch gekennzeichnet, daß vier schwenkbare Richtspiegel (5 bis 8) vorgesehen sind, deren Schwenkachsen ein Viereck um die optische Achse des Hohlspiegels (2) bilden.

3. Optische Anordnung nach Anspruch 1 oder 2, dadruch gekennzeichnet, daß zum Erfassen der Bewegungsrichtung der die Strahlungsänderung auslösenden Ursache ein zweiter optisch wirksamer Vorhang innerhalb des ersten gebildet wird, dadurch, daß eine zweite entsprechende optische Anordnung in derselben optischen Achse vor der ersten vorgesehen ist und daß der bzw. die Richtspiegel (15, 16) der zweiten optischen Anordnung einen geringeren Winkel zur optischen Achse haben als die der ersten.

4. Optische Anordnung nach Anspruch 3, dadurch gekennzeichnet, daß der Detektor (10) der Hohlspiegel (11) und der Kegelstumpfkörper (12) der zweiten optischen Anordnung in der optischen Achse spiegelbildlich zur ersten Anordnung liegen.

## Claims

1. An optical arrangement for a passive infrared motion alarm for monitoring a space, having the following features:

a) a reflector arrangement directing radiation from at least one field of vision onto an infrared detector (1) which forms a signal from a characteristic change in the radiation;

b) the relector arrangement comprises at least one directional reflector (7), a hollow reflector (2), and a reflecting surface (4) opposite the detector;

c) the hollow reflector (2) centrally surrounds the infrared detector (1);

d) opposite the detector (1) there is arranged a reflecting body (3) whose axis of rotation is arranged on the optical axis of the receiver (1) and whose reflecting surface faces the hollow reflector (2);

characterised by the following features:

e) the field of vision or fields of vision form an optically effective curtain which at least partially surrounds the space to be monitored;

f) the reflecting body (3) arranged opposite the detector (1) is a truncated cone whose small cut surface (4) faces the detector (1) and whose shell surface (9) faces the hollow reflector (2);

g) the cone shell surface (4) is faced by at least one plane directional reflector (5 to 8) which is arranged at the edge of the hollow reflector (2) and which can be swivelled about an edge, which faces away from the direction of view, against the optical axis of the hollow reflector (2) and which plane directional reflector reflects incident radiation onto the cone shell surface (9) at an adjustable angle.

2. An optical arrangement as claimed in Claim 1, characterised in that there are arranged four directional reflectors (5 to 8) which can be swivelled, and whose swivelling axes form a square around the optical axis of the hollow reflector (2).

3. An optical arrangement as claimed in Claim 1 or 2, characterised in that to detect the moving direction of the cause which triggers the change in radiation, a second optically effective curtain is formed inside the first one, in that a second corresponding optical arrangement is arranged in the same optical axis before the first one, and in that the directional reflector(s) (15, 16) of the second optical arrangement has/have a smaller angle in relation to the optical axis than that/those of the first one.

4. An optical arrangement as claimed in Claim 3, characterised in that the detector (10), the hollow reflector (11) and the truncated cone body (12) of the second optical arrangement are arranged in the optical axis in mirror-inverted fashion to the first arrangement.

**Revendications**

1. Agencement optique pour un dispositif passif de signalisation de mouvements, sensible aux infrarouges, pour surveiller un local, remarquable en ce que:

a) un arrangement à miroirs dirige le rayonnement provenant d'au moins un champ visuel sur un détecteur infrarouges (1) qui permet la formation d'un signal à partir d'un changement caractéristique du rayonnement;

b) l'arrangement à miroirs comporte au moins un miroir plan basculant (7), un miroir concave (2) et une surface réfléchissante (4), qui se situent en face du détecteur;

c) le miroir concave (2) entoure centralement le détecteur (1) des infrarourges;

d) en face du détecteur est disposé un corps réfléchissant (3) dont l'axe de rotation se situe sur l'axe optique du récepteur (1);

caractérisé par les moyens suivants:

e) le champ visuel ou les champs visuels constituent un écran optiquement actif qui entoure au moins partiellement le local à surveiller;

f) le corps réfléchissant (3) qui est situé en face du détecteur (1) a la forme d'un tronc de cône dont la petite base (4) est tournée vers le détecteur (1) et dont la surface latérale (9) est tournée vers le miroir concave (2);

g) en face de la surface latérale (4) du tronc de cône il est prévu, sur le bord du miroir concave (2) au moins un miroir plan basculant (5 à 8) que l'on peut basculer par rapport à l'axe optique du miroir concave (2) autour d'un bord éloigné de la direction de l'observation, et qui réfléchit, sous un angle réglable, le rayonnement incident sur la surface latérale (9) du cône.

2. Agencement optique selon la revendication 1, caractérisé par le fait qu'il est prévu quatre miroirs plans basculants (5 à 8) dont les axes forment un quadrilatère autour de l'axe optique du miroir concave (2).

3. Agencement optique selon la revendication 1 ou 2, caractérisé par le fait que pour saisir la direction du mouvement de la cause qui déclenche la modification du rayonnnement, un second écran optiquement actif est formé à l'intérieur du premier en prévoyant un second arrangement optique correspondant dans le même axe optique, en avant du premier, et en faisant en sorte que le ou les miroirs plans basculants (15, 16) du second arrangement optique fassent avec l'axe optique un angle plus faible que celui du premier arrangement optique.

4. Agencement optique selon la revendication 3, caractérisé par le fait que le détecteur (10), le miroir concave (11) et le corps en tronc de cône (12) du second arrangement optique se situent dans l'axe optique symétriquement par rapport au premier arrangement.

FIG 1

FIG 2

# FIG 3